# EUROPÄISCHE PATENTSCHRIFT

(11) **EP 4 116 849 B1**
(45) Veröffentlichungstag und Bekanntmachung des Hinweises auf die Patenterteilung: **22.10.2025**
(21) Anmeldenummer: 21184213.3
(22) Anmeldetag: 07.07.2021
(51) Int. Cl.: G06F 21/32, G06F 21/60, H04L 9/06, H04L 9/32, G06F 21/78, H04L 9/08

(54) **COMPUTERIMPLEMENTIERTES VERFAHREN ZUM VERWALTEN EINES EINE SICHERHEITSRELEVANTE INFORMATION UMFASSENDEN DATENSATZES**
COMPUTER IMPLEMENTED METHOD FOR MANAGING A DATA SET COMPRISING SECURITY-RELEVANT INFORMATION
PROCÉDÉ MIS EN OEUVRE PAR ORDINATEUR PERMETTANT DE GÉRER UN ENSEMBLE DE DONNÉES COMPRENANT DES INFORMATIONS RELATIVES À LA SÉCURITÉ

(43) Veröffentlichungstag der Anmeldung: 11.01.2023
(73) Patentinhaber: iCognize GmbH, 63128 Dietzenbach (DE)
(72) Erfinder: LENHARDT, Dr. Alexander W., 63303 Dreieich (DE)
(74) Vertreter: WSL Patentanwälte Partnerschaft mbB

(56) Entgegenhaltungen:
- WO-A1-2018/165811
- US-A1- 2008 019 573
- US-A1- 2009 316 884
- US-A1- 2013 067 211
- US-A1- 2020 322 140

## Beschreibung

Die vorliegende Anmeldung betrifft ein computerimplementiertes Verfahren zum Verwalten eines eine sicherheitsrelevante Information umfassenden Datensatzes.

Datensätze, die eine sicherheitsrelevante Information umfassen, welche nicht in unberechtigte Hände gelangen soll, sind aus vielen technischen Gebieten bekannt. Ein besonders prägnantes Beispiel für eine solche sicherheitsrelevante Information sind biometrische Daten, welche eine mathematische Beschreibung einer Eigenschaft eines Körpers oder eines Körperteils einer Person bereitstellen. Ein Beispiel für ein solches biometrisches Merkmal ist ein Fingerabdruck, ein Bild der Iris, ein Merkmal eines Gesichts und auch ein Venenmuster.

Bei der Verwendung eines biometrischen Merkmals als Zugangskontrolle wird die Eigenschaft des entsprechenden Körperteils mithilfe einer Sensorik erfasst und mit einem zuvor erstellten und abgespeicherten Datensatz dem sogenannten Template, verglichen. Nur wenn es eine hinreichende Ähnlichkeit oder Korrelation zwischen den erfassten Eigenschaften und einem aus einer Mehrzahl von abgelegten Templates gibt, so wird von einem "Match" ausgegangen und ein Zugang oder ein Zugriff auf eine Ressource gewährt. Ist bekannt, welche Person den Datensatz des Templates, für das der "Match" festgestellt wurde, erzeugt hat, so ist die Person auf diese Weise nicht nur authentifiziert, sondern auch identifiziert.

Fällt der Datensatz mit dem biometrischen Merkmal in falsche Hände, so ist die Sicherheit des biometrischen Systems gefährdet. Zudem kann das entsprechende biometrische Merkmal für diese Person im Grunde genommen nie wieder in einem biometrischen System als Erkennungsmerkmal genutzt werden. So ist es denkbar, aus dem Datensatz mit der mathematischen Beschreibung des biometrischen Merkmals dieses selbst in Form einer Attrappe zu rekonstruieren. Diese Attrappe kann dann zur Überwindung eines biometrischen Systems mit einer sogenannten "presentation attack" verwendet werden.

Darüber hinaus handelt es sich bei vielen sicherheitsrelevanten Informationen, insbesondere bei Templates für die biometrische Authentifizierung, um höchstpersönliche Daten, die es nach den Gesetzen des Datenschutzes besonders zu schützen gilt. Zum Teil sind solche höchstpersönlichen Daten sogar von der dauerhaften Speicherung durch Dritte ausgenommen.

Ähnliche Probleme ergeben sich aber nicht nur bei Datensätzen, die biometrische Merkmale mathematisch beschreiben, sondern beispielsweise auch bei alphanumerischen Schlüsseln, elektronischen Urkunden und ähnlichem.

Aus dem Stand der Technik ist es bekannt, die Verwaltung eines Datensatzes mit einer sicherheitsrelevanten Information dem Benutzer selbst zu übertragen. In solchen Ausführungsformen wird der Datensatz mit der sicherheitsrelevanten Information in einem mobilen, von der zu authentifizierenden oder zu identifizierenden Person mitzuführenden Datenspeicher gespeichert. Der Datensatz mit der sicherheitsrelevanten Information wird für die Authentifizierung von dem Authentifizierungssystem aus dem mobilen Speicher ausgelesen und mit den bei der Authentifizierung erfassten Daten, beispielsweise eines Bilds des entsprechenden Körperteils oder einer Eingabe eines Schlüssel durch den Benutzer, verglichen. Das Template in Form des Datensatzes mit der sicherheitsrelevanten Information befindet sich dann ausschließlich zum Zeitpunkt des Abgleichs in dem Authentifizierungssystem und wird dort nicht persistent gespeichert. Damit ist zumindest den Anforderungen des Datenschutzes genüge getan.

Allerdings zeigt sich, dass der Datensatz mit der sicherheitsrelevanten Information im Umfeld des Benutzers zumeist schlechter geschützt werden kann als in einem permanent administrierten Datenverarbeitungssystem, insbesondere als in dem Authentifizierungssystem selbst.

Aus der WO 2018/1665811 A1 ist ein Verfahren zum Speichern und Verifizieren einer biometrischen Vorlage sowie ein biometrisches Erkennungsgerät bekannt. Das Verfahren zum Speichern einer biometrischen Vorlage umfasst: Verarbeiten einer mittels biometrischer Vorlagenverschlüsselung erzeugten biometrischen verschlüsselten Vorlage, um M Gruppen biometrisch verschlüsselter Vorlagendaten zu erhalten, wobei M ≥ 2; und Speichern der M Gruppen biometrisch verschlüsselter Vorlagendaten in N Speicherbereichen, so dass nach einem Speichervorgang mindestens eine Gruppe biometrisch verschlüsselter Vorlagendaten in jedem der Speicherbereiche gespeichert wird, wobei 1 < N ≤ M.

Die US 2008/019573 A1 offenbart ein Benutzerauthentifizierungsverfahren, das auf der Verwendung biometrischer Identifikationstechniken basiert und die Schritte umfasst: Generieren einer biometrischen Referenzvorlage aus einem ersten biometrischen Bild eines zu authentifizierenden Benutzers; Aufteilen der biometrischen Referenzvorlage in einen ersten und einen zweiten biometrischen Referenzvorlagenabschnitt, die physisch getrennt werden können; Signieren und Verschlüsseln des ersten und des zweiten biometrischen Referenzvorlagenabschnitts; Speichern des signierten und verschlüsselten ersten und zweiten biometrischen Referenzvorlagenabschnitts in unterschiedlichen Speichern.

Gemäß der US 2013/067211 A1 wird im Bereich der computergestützten Kryptographie, beispielsweise einer verschlüsselten Blockverschlüsselung mit mehreren aufeinanderfolgenden Runden, die Verschlüsselung durch einen Schutzprozess gegen Angriffe gehärtet. Der Schutzprozess verwendet Blocklängen, die größer oder kleiner sind als die einer zugehörigen Standardverschlüsselung und kein ganzzahliges Vielfaches davon sind, und ohne Nachrichtenauffüllung.

Die US 2020/322140 A1 offenbart Verfahren mit den Schritten: Empfangen von Daten von mehreren Datenanbieterknoten durch einen Broadcast-Serverknoten; und Ausführen eines Smart Contracts durch den Broadcast-Serverknoten, um: die Daten mit Verschlüsselungsschlüsseln zu verschlüsseln; eine Broadcast-Warteschlange basierend auf den verschlüsselten Daten zu generieren; und eine Teilmenge von Verbraucherknoten zuweisen, die berechtigt sind, die verschlüsselten Daten der Broadcast-Warteschlange zu empfangen.

Gemäß der US 2009/316884 A1 verschlüsselt eine Vorrichtung zur Erzeugung verschlüsselter Daten Verschlüsselungsobjektdaten einschließlich einer Vielzahl von Rahmendaten in einem Chiffrierblock-Kettenmodus unter Verwendung einer Chiffrierverkettungseinheit mit einer beliebigen Datenlänge. Ein Rahmenlängen-/Verschlüsselungsverkettungs-Analyseabschnitt erzeugt aus AV-Datenverwaltungsinformationen zusätzliche Informationsheader, von denen jeder einem der Rahmendaten entspricht und einen Rahmenheader für die Rahmendaten enthält. Ein Verschlüsselungs-/Entschlüsselungsverarbeitungsabschnitt verschlüsselt die Rahmendaten in einem Chiffrierblock-Kettenmodus, um eine Reihe verschlüsselter Daten zu erzeugen. Ein Header-Analyse-/Hinzufügungsabschnitt verknüpft eines der mehreren verschlüsselten Daten, das eine Grenze zwischen n-ten Frame-Daten und (n+1)-ten Frame-Daten enthält, mit dem zusätzlichen Informationsheader, der dem (n+1)-ten Frame entspricht Daten und Hinzufügen des Zusatzinformationsheaders an einer vorgegebenen Position.

Demgegenüber ist es Aufgabe der vorliegenden Erfindung ein Verfahren zum Verwalten eines eine sicherheitsrelevante Information enthaltenden Datensatzes bereitzustellen, welches gleichzeitig den hohen Anforderungen an den Datenschutz gerecht wird und eine sichere Speicherung der sicherheitsrelevanten Information ermöglicht.

Die zuvor genannte Aufgabe wird erfindungsgemäß durch ein computerimplementiertes Verfahren zum Verwalten eines eine sicherheitsrelevante Information enthaltenden Datensatzes gelöst, wobei das Verfahren die Schritte aufweist
Aufspalten des Datensatzes in ein erstes Datensatzfragment mit einem ersten Teil der sicherheitsrelevanten Information und in ein zweites Datensatzfragment mit einem zweiten Teil der sicherheitsrelevanten Information,
Speichern des ersten Datensatzfragments in einem ersten nichtflüchtigen Speicher und Speichern des zweiten Datensatzfragments in einem zweiten nichtflüchtigen Speicher, wobei das erste Datensatzfragment und das zweite Datensatzfragment ausschließlich gemeinsam die vollständige sicherheitsrelevante Information repräsentieren und
wobei zumindest das erste Datensatzfragment mit dem ersten Teil der sicherheitsrelevanten Information oder das zweite Datensatzfragment mit dem zweiten Teil der sicherheitsrelevanten Information derart ausgestaltet ist, dass es keinen Rückschluss auf den anderen Teil der sicherheitsrelevanten Information ermöglicht,
wobei das Aufspalten des Datensatzes die Schritte umfasst:
   Bilden eines Verarbeitungsdatensatzes aus dem Datensatz, so dass der Verarbeitungsdatensatz weitere Daten umfasst,
   Erzeugen eines kryptographischen Schlüssels und Verschlüsseln des Verarbeitungsdatensatzes unter Verwendung des kryptographischen Schlüssels, so dass ein verschlüsselter Datensatz erzeugt wird,
   Zerlegen des verschlüsselten Datensatzes in eine Mehrzahl von Datenscheiben, wobei das Zerlegen des verschlüsselten Datensatzes derart erfolgt, dass eine vorgegebene Anzahl von Datenscheiben mit identischer Länge erzeugt wird, so dass die Länge jeder Datenscheibe mit identischer Länge von einer Gesamtlänge des verschlüsselten Datensatzes abhängt, und
      wobei das Zerlegen des verschlüsselten Datensatzes die Schritte umfasst
      Überprüfen, ob die Länge jeder Datenscheibe mit identischer Länge ein ganzzahliges Vielfaches einer Verschlüsselungsblocklänge des zum Verschlüsseln des Verarbeitungsdatensatzes verwendeten kryptographischen Verfahrens ist, und
      wenn dies der Fall ist, Reduzieren der vorgegebenen Anzahl von Datenscheiben um eins und Wiederholen des Zerlegens des Verarbeitungsdatensatzes, solange bis die Länge der Mehrzahl von Datenscheiben mit identischer Länge kein Vielfaches der Verschlüsselungsblocklänge des zum Verschlüsseln des Verarbeitungsdatensatzes verwendeten kryptographischen Verfahrens mehr ist,
   Verteilen der Mehrzahl von Datenscheiben anhand eines Verteilungsschemas auf die ersten und zweiten Datensatzfragmente,
   Erzeugen eines Headerdatensatzes, der den kryptographischen Schlüssel und das Verteilungsschema umfasst,
   Hinzufügen eines ersten Headers auf Grundlage des Headerdatensatzes zu dem ersten Datensatzfragment und
   Hinzufügen eines zweiten Headers zu dem zweiten Datensatzfragment.

Es ist die Grundidee des Verfahrens gemäß der vorliegenden Erfindung, die sicherheitsrelevante Information auf mindestens zwei Datensatzfragmente mit jeweils einem Teil der sicherheitsrelevanten Information aufzuteilen. Diese zwei Datensatzfragmente werden in voneinander verschiedenen Speicher persistent gespeichert. Dabei sind erfindungsgemäß die zwei Datensatzfragmente derart ausgestaltet, dass sie ausschließlich gemeinsam die vollständige sicherheitsrelevante Information repräsentieren. Zudem lässt zumindest eines der Datensatzfragmente keinen Rückschluss auf das jeweils andere Datensatzfragment zu.

Es versteht sich, dass in einer Ausführungsform ein Rückschluss auf den jeweils anderen Teil der sicherheitsrelevanten Information von keinem der ersten und zweiten Datensatzfragmente aus möglich ist.

Das erfindungsgemäße Verfahren ermöglicht es, die sicherheitsrelevante Information auf zwei Speicher zu verteilen, wobei es einem Angreifer, der in den Besitz nur eines der ersten und zweiten Datensatzfragmente gelangt, prinzipiell nicht gelingen kann, die sicherheitsrelevante Information vollständig zu gewinnen.

Es versteht sich, dass eine solche Ausgestaltung, bei welcher nur eines der Datensatzfragmente mit einem Teil der sicherheitsrelevanten Information in einer Datenverarbeitungseinrichtung, beispielsweise einem Authentifizierungssystem, gespeichert wird, auch den Grundsätzen des Datenschutzes genügt.

Während in der nachstehenden Beschreibung von einem ersten und einem zweiten Datensatzfragment die Rede ist, ist die vorliegende Erfindung nicht auf die Verteilung der sicherheitsrelevanten Information auf genau zwei Datensatzfragmente beschränkt. In einer Ausführungsform jedoch erfolgt das Aufspalten des Datensatzes in genau zwei Datensatzfragmente.

Das Aufspalten des Datensatzes umfasst erfindungsgemäß die Schritte
Bilden eines Verarbeitungsdatensatzes aus dem Datensatz, sodass der Verarbeitungsdatensatz weitere Daten umfasst,
Erzeugen eines kryptografischen Schlüssels,
Verschlüsseln des Verarbeitungsdatensatzes unter Verwendung des kryptografischen Schlüssels, sodass ein verschlüsselter Datensatz erzeugt wird,
Zerlegen des verschlüsselten Datensatzes in eine Mehrzahl von Datenscheiben,
Verteilen der Mehrzahl von Datenscheiben anhand eines Verteilungsschemas auf die ersten und zweiten Datensatzfragmente,
Erzeugen eines Headerdatensatzes, der den kryptografischen Schlüssel und das Verteilungsschema umfasst, und
Hinzufügen eines ersten Headers auf Grundlage des Headerdatensatzes zu dem ersten Datensatzfragment und Hinzufügen eines zweiten Headers zu dem zweiten Datensatzfragment.

In einer Ausführungsform umfassen die in dem Verarbeitungsdatensatz enthaltenen weiteren Daten zusätzlich zu den Daten des Datensatzes eine Information über eine Länge des Datensatzes. Das Bilden des Verarbeitungsdatensatzes aus dem ursprünglichen Datensatz, wobei der Verarbeitungsdatensatz eine Information über eine Länge des Datensatzes umfasst, ermöglicht es später, bei der Entschlüsselung die ursprüngliche Länge des Datensatzes zu rekonstruieren.

Zum Erzeugen des kryptografischen Schlüssels stehen ganz unterschiedliche Ansätze zur Verfügung stehen. In einer Ausführungsform der Erfindung wird der kryptografische Schlüssel aus dem Datensatz erzeugt. In einer Ausführungsform der Erfindung ist der kryptografische Schlüssel ein mittels eines SHA Algorithmus aus dem Datensatz oder dem Verarbeitungsdatensatz generierter Hash-Wert. Dabei ist in einer Ausführungsform der SHA Algorithmus ein SHA-2, vorzugsweise ein SHA-256 Algorithmus. Der Hash-Wert, welcher mit dem SHA 256-Algorithmus erzeugt wird, hat eine Länge von 256 Bits bzw. 32 Bytes. Dies sorgt dafür, dass man aus einem Datensatz beliebiger Länge immer einen Schlüssel mit einer festen Länge von 32 Bytes erhält.

In einer Ausführungsform der Erfindung wird dem kryptographischen Schlüssel neben einem aus dem Datensatz generierten Anteil ein Initialvektor hinzugefügt. In einer Ausführungsform der Erfindung ist der Initialvektor spezifisch für das verschlüsselnde System, sodass unterschiedliche Systeme die Datensatzfragmente anderer Systeme nicht rekonstruieren können, da sie nicht denselben Initialvektor nutzen.

In einer Ausführungsform der Erfindung wird bei dem Verschlüsseln des Verarbeitungsdatensatzes ein Verschlüsselungsalgorithmus verwendet, der jeden Datenblock der sicherheitsrelevanten Information in Abhängigkeit von einem Inhalt eines vorangehenden Datenblocks, insbesondere vom dem unmittelbar vorangehenden Datenblock, der sicherheitsrelevanten Information in dem Datensatz verschlüsselt. Ein derartiger Algorithmus wird auch als Chained-Block-Cypher-Mode (kurz CBC-Mode) bezeichnet. Der CBC-Mode sorgt dafür, dass Blöcke mit demselben Informationsinhalt, die aber an unterschiedlichen Positionen im ursprünglichen Verarbeitungsdatensatz stehen, im verschlüsselten Datensatz nicht die gleiche Bitfolge aufweisen. Der CBC-Mode sorgt dafür, dass sich, wenn ein Defekt in dem verschlüsselten Datensatz vorliegt, dieser ab der Position des Defekts nicht mehr entschlüsseln lässt. Die gesamten verschlüsselten Daten sind dann ab der Position des Defekts unbrauchbar. Dies erhöht die kryptologische Sicherheit der Verschlüsselung.

In einer Ausführungsform der Erfindung erfolgt das Verschlüsseln des Verarbeitungsdatensatzes mit dem AES 256-CBC-Algorithmus. Da dieser Algorithmus nur mit vollständigen 16 Byte langen Datenblöcken arbeitet, muss in einer solchen Ausführungsform der Verarbeitungsdatensatz um so viele zusätzliche und zufällig gewählte Bytes ergänzt werden, dass seine Gesamtlänge in Bytes ein Vielfaches von 16 ergibt (Padding). In einer Ausführungsform in der das Verschlüsseln mit dem AES 256-CBC-Algorithmus erfolgt, ist es notwendig, dass der Verarbeitungsdatensatz eine Information über die Länge des ursprünglichen Datensatzes enthält.

In einer Ausführungsform der Erfindung ist das Verteilungsschema ein zufälliges Verteilungsschema.

Das Zerlegen des verschlüsselten Datensatzes erfolgt derart, dass eine vorgegebene Anzahl von Datenscheiben mit identischer Länge erzeugt wird, sodass die Länge jeder Datenscheibe mit identischer Länge von einer Gesamtlänge des verschlüsselten Datensatzes abhängt.

Ist die Länge der Datenscheiben nicht gleich einem ganzzahligen Vielfachen der Gesamtlänge des verschlüsselten Datensatzes, so enthält die letzte Datenscheibe dann den Rest des Verschlüsselten Datensatzes. Daher kann die letzte Datenscheibe kürzer sein als die übrigen Datenscheiben mit identischer Länge.

Beispielsweise soll in einer Ausführungsform der Erfindung der verschlüsselte Datensatz in eine maximale Anzahl von 64 Datenscheiben zerlegt werden. Dies erlaubt es später, jeden Datensatz durch ein Bit einer 64-bitigen Zahl zu repräsentieren. Dazu wird zunächst die Gesamtlänge des verschlüsselten Datensatzes durch 64 geteilt und das Ergebnis zur nächsthöheren ganzen Zahl aufgerundet. Das ergibt dann die Länge einer jeden Datenscheibe innerhalb des verschlüsselten Datensatzes. Lediglich die letzte Datenscheibe hat eine kürzere Länge.

Zudem umfasst das Zerlegen des verschlüsselten Datensatzes zusätzlich die Schritte
Überprüfen, ob die Länge jeder Datenscheibe mit identischer Länge ein ganzzahliges Vielfaches einer Verschlüsselungsblocklänge des zum Verschlüsseln des Verarbeitungsdatensatzes verwendeten kryptografischen Verfahrens ist, und
wenn dies der Fall ist, Reduzieren der vorgegebenen Anzahl von Datenscheiben um eins und
Wiederholen des Zerlegens des Verarbeitungsdatensatzes, solange bis die Länge der Mehrzahl von Datenscheiben mit identischer Länge kein ganzzahliges Vielfaches der Verschlüsselungsblocklänge des zum Verschlüsseln des Verarbeitungsdatensatzes verwendeten kryptografischen Verfahrens mehr ist.

Die Forderung, dass die Länge der Mehrzahl von Datenscheiben mit identischer Länge kein ganzzahliges Vielfaches der Verschlüsselungsblocklänge des zum Verschlüsseln des Verarbeitungsdatensatzes verwendeten kryptografischen Verfahrens ist, wird im Sinne der vorliegenden Anmeldung auch als "Misalignment" bezeichnet.

Beispielsweise wird überprüft, ob die ermittelte Länge jeder Datenscheibe mit identischer Länge ein ganzzahliges Vielfaches der Verschlüsselungsblocklänge, beispielsweise 16 Bytes für den AES 256-Algorithmus, ist. Sollte dies der Fall sein, so wird die maximale Anzahl der Datenscheiben um eins reduziert und das Zerlegen erfolgt erneut, so lange bis die Bedingung des "Misalignments" erfüllt ist.

Das "Misalignment" sorgt dafür, dass in jeder Datenscheibe immer ein unvollständiger Datenblock enthalten ist, dessen Blocklänge nicht gleich der Verschlüsselungsblocklänge des zum Verschlüsseln des Verarbeitungsdatensatzes verwendeten kryptografischen Verfahrens ist. Dies erschwert die Rekonstruktion des ursprünglichen Verarbeitungsdatensatzes ohne Kenntnis aller Datenscheiben zusätzlich bzw. macht eine solche unmöglich. Beim Wiederherstellen des Verarbeitungsdatensatzes stößt die Entschlüsselung immer wieder auf einen unvollständigen Datenblock innerhalb einer Datenscheibe aufgrund des "Misalignments". Dank der genutzten Verkettung bei der Verschlüsselung insbesondere durch den CBC-Mode, sind aber alle Daten ab einer fehlenden Datenscheibe nicht mehr zu entschlüsseln, da die dringend notwendigen Vorgängerdaten fehlen. Dies wäre unter Umständen nicht der Fall, wenn immer vollständige Datenblöcke in jeder Datenscheibe für einen Angriff bzw. eine Entschlüsselung durch einen Nichtberechtigten verfügbar wären.

In einer Ausführungsform der Erfindung wird zumindest dem ersten Header des ersten Datensatzfragments oder dem zweiten Header des zweiten Datensatzfragments eine Kennung des jeweils anderen Datensatzfragments hinzugefügt. Ist die Kennung für das jeweils andere Datensatzfragment eindeutig, insbesondere eineindeutig, so ermöglicht es eine solche Kennung, beim Zusammenfügen der beiden Datensatzfragmente vor der eigentlichen Entschlüsselung zu überprüfen, ob die beiden Datensatzfragmente zusammengehören oder nicht. Dies erhöht die Effizienz des verwendeten Verfahrens beim Vereinigen der auf die Datensatzfragmente verteilten Information. In einer Ausführungsform ist die Kennung ein Hashwert des jeweils anderen Datensatzfragments. Ein solcher Hashwert ist mit hoher Wahrscheinlichkeit einzigartig für das zugrundeliegende Datensatzfragment.

In einer weiteren Ausführungsform der Erfindung ist die Datenmenge des ersten Datensatzfragments auswählbar einstellbar. Geht man davon aus, dass das erste Datensatzfragment auf einem mobilen Speichermedium, welches ein Benutzer mit sich führt, persistent gespeichert wird, so ist es sinnvoll, die Datenmenge des ersten Datensatzfragments einzustellen. Insbesondere ist es möglich, die Datenmenge des ersten und des zweiten Datensatzfragments stark asymmetrisch zu wählen.

In einer Ausführungsform der Erfindung umfasst das Verfahren zusätzlich die Schritte
Erzeugen eines Dummyheaderdatensatzes, der den zweiten Header bildet, und
Bilden einer Exklusiv-oder-Kombination des Headerdatensatzes und des Dummyheaderdatensatzes, wobei diese Exklusiv-oder-Kombination den zweiten Header bildet.

Durch die geforderte Exklusiv-oder-Kombination aus dem Datensatz und dem Dummyheaderdatensatz kann der Headerdatensatz mit dem kryptografischen Schlüssel nur wiederhergestellt werden, wenn das erste und das zweite Datensatzfragment vorliegen und gemeinsam verarbeitbar sind.

In einer Ausführungsform der Erfindung enthält der Dummyheaderdatensatz zufällige Daten. In einer weiteren Ausführungsform hat der Dummyheaderdatensatz die gleiche Länge wie der Headerdatensatz.

In einer Ausführungsform der Erfindung wird jedes zweite Byte des ersten Headers mit dem jeweiligen Byte des zweiten Headers getauscht. Auf diese Weise wird eine bessere Verteilung gewährleistet.

In einer Ausführungsform der Erfindung ist der erste nichtflüchtige Speicher Teil einer mobilen Speichereinrichtung, wobei die mobile Speichereinrichtung vorzugsweise eine drahtlos auslesbare Schnittstelle umfasst. Somit kann das erste Datensatzfragment von einem Benutzer mit der mobilen Speichereinrichtung mitgeführt werden und von einem Authentifizierungssystem ausgelesen werden.

In einer Ausführungsform der Erfindung ist die sicherheitsrelevante Information ausgewählt aus einer Gruppe bestehend aus einer digitalen Urkunde, einem digitalen Kunstwerk, einem Token und einem einen Zugangsschlüssel, vorzugsweise ein Template, das ein biometrisches Merkmal eines Benutzers repräsentiert.

In einer Ausführungsform der Erfindung umfasst das Verfahren weiterhin die Schritte
Auslesen des ersten Datensatzfragments aus dem ersten nichtflüchtigen Speicher und Auslesen des zweiten Datensatzfragments aus dem zweiten nichtflüchtigen Speicher,
Wiederherstellen der sicherheitsrelevanten Information durch Kombinieren des ersten Teils der sicherheitsrelevanten Information und des zweiten Teils der sicherheitsrelevanten Information und
Ausgeben der sicherheitsrelevanten Information.

Es versteht sich, dass bei dem Wiederherstellen der sicherheitsrelevanten Information sämtliche Schritte, so wie sie zuvor einzeln oder in Kombinationen beschrieben wurden, invertiert werden müssen.

In einer Ausführungsform der Erfindung sind das erste und das zweite Datensatzfragment derart ausgestaltet, dass sich vor dem Wiederherstellen der sicherheitsrelevanten Information anhand der ersten und zweiten Datensatzfragmente feststellen lässt, dass die beiden Datensatzfragmente zu dem gleichen Datensatz gehören.

In einer Ausführungsform der Erfindung umfasst daher das Verfahren den Schritt
vor dem Wiederherstellen der sicherheitsrelevanten Information prüfen, ob das erste und das zweite Datensatzfragment zum gleichen Datensatz gehören und nur dann, wenn das erste und das zweite Datensatzfragment zum gleichen Datensatz gehören, Ausführen des Wiederherstellens der sicherheitsrelevanten Information.

Die oben genannte Aufgabe wird auch durch ein computerimplementiertes Verfahren zum Überprüfen einer Zugangsberechtigung eines Benutzers zu einer Ressource gelöst, wobei dieses Verfahren ein Verfahren zum Verwalten einer sicherheitsrelevanten Information in einer der zuvor dargestellten Ausführungsformen umfasst, wobei die sicherheitsrelevante Information ein Template zur Authentifizierung des Benutzers ist, wobei der erste nichtflüchtige Speicher Teil einer mobilen Speichereinrichtung ist, und wobei das Verfahren weiterhin die Schritte aufweist Einlesen eines Zugangsschlüssels, Bestimmen einer Korrelation zwischen dem Zugangsschlüssel und dem Template und Gewähren eines Zugangs zu einer Ressource, wenn die Korrelation einen bestimmten Korrelationsschwellenwert übersteigt.

In einem solchen Verfahren zur Zugangskontrolle wird nach dem Zusammenführen des ersten und des zweiten Datensatzfragments zu dem Template dieses Template mit einem eingelesenen Zugangsschlüssel verglichen, d.h. eine Korrelation zwischen diesen gebildet. Der Zugang wird nur dann gewährt, wenn die Korrelation einen bestimmten Korrelationsschwellenwert übersteigt.

In einer Ausführungsform erfolgt das Einlesen des Zugangsschlüssels mit Hilfe eines Sensors zum Erfassen eines biometrischen Merkmals des Benutzers. In einer weiteren Ausführungsform erfolgt das Einlesen des Zugangsschlüssel durch Eingabe des Zugangsschlüssels in eine Benutzerschnittstelle durch den Benutzer, beispielsweise in eine numerische oder alphanumerische Tastatur.

In einer Ausführungsform der Erfindung ist der Zugangsschlüssel ein biometrisches Merkmal einer Person, beispielsweise ein Fingerabdruck, ein Bild der Iris, ein Merkmal eines Gesichts oder ein Venenmuster. Die sicherheitsrelevante Information ist dann ein Template mit einer mathematischen Beschreibung des Zugangsschlüssels, insbesondere einer mathematischen Beschreibung des biometrischen Merkmals des Benutzers.

Die Ressource in diesem Sinne ist in einer Ausführungsform eine bestimmte Datenmenge, auf die der Benutzer erst nach Authentifizierung Zugang hat. In diesem Fall ist der Zugang ein Zugriff auf die bestimmte Datenmenge. In einer Ausführungsform ist die Ressource ein digitales Endgerät, insbesondere ein Rechner, ein Tablet oder ein Mobiltelefon. In einer Ausführungsform ist die Ressource ein Raum eines Gebäudes, ein Gebäude oder ein Gelände, zu dem der Benutzer nach der Authentifizierung Zugang erhält.

In einer Ausführungsform ist die Ressource ein organisatorischer und/oder datenverarbeitungstechnischer Prozess, welcher nach der Authentifizierung des Benutzers ausgelöst wird. Ein Beispiel für einen solchen Prozess ist eine bargeldlose Zahlung. Diese wird in einer Ausführungsform erst ausgelöst bzw. freigegeben, wenn ein Template mit dem Zugangsschlüssel eine Übereinstimmung ergeben hat.

Insoweit die oben beschriebenen Ausführungsformen des erfindungsgemäßen computerimplementierten Verfahrens zumindest teilweise realisiert werden können, wobei eine softwaregesteuerte Datenverarbeitungsvorrichtung verwendet wird, ist es offensichtlich, dass ein Computerprogramm, das solch eine Softwaresteuerung bereitstellt und ein Speichermedium, auf welchem solch ein Computerprogramm gespeichert ist, als Aspekte der Erfindung in Betracht zu ziehen sind.

Daher betrifft die vorliegende Erfindung auch ein Computerprogramm umfassend Befehle, die bei der Ausführung des Computerprogramms durch einen Computer diesen veranlassen, ein computerimplementiertes Verfahren, so wie es zuvor in Ausführungsformen davon beschrieben wurde, auszuführen.

Ferner betrifft die vorliegende Anmeldung einen maschinenlesbaren Datenträger mit einem solchen darauf gespeicherten Computerprogramm.

Die vorliegende Anmeldung betrifft auch Datenverarbeitungsvorrichtung umfassend Mittel zur Ausführung eines computerimplementierten Verfahrens so wie es zuvor in Ausführungsformen davon beschrieben wurde.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit gleichen Bezugszeichen bezeichnet.
- Figur 1: ist eine schematische Darstellung eines Systems zur Zugangskontrolle für einen Raum gemäß einer ersten Ausführungsform.
- Figuren 2a und 2b: zeigen ein schematisches Blockdiagram eines Verfahrens zum Verwalten einer sicherheitsrelevanten Information in Form eines Templates für das System zur Zugangskontrolle aus Figur 1, wobei die Figuren 2a und 2b das Zerlegen des Datensatzes beschreiben.
- Figuren 3a und 3b: zeigen ein schematisches Blockdiagram des Verfahrens zum Verwalten einer sicherheitsrelevanten Information in Form eines Templates für das System zur Zugangskontrolle aus Figur 1, wobei die Figuren 3a und 3b das Zusammenführen der Datensatzfragmente beschreiben.

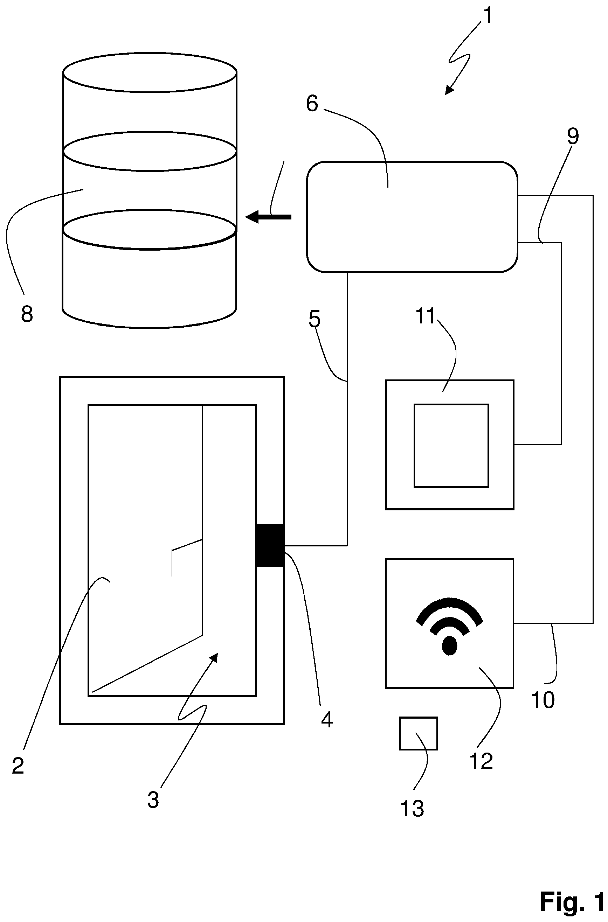

Figur 1 zeigt schematisch ein System 1 zur Zugangskontrolle für einen mit einer Tür 2 verschließbaren Raum 3. Die Tür weist ein elektronisches Schloss 4 auf, mit welchem sich die Tür verriegeln und ausschließlich durch einen elektrischen Entriegelungsbefehl öffnen lässt. Das Schloss 4 ist über eine Steuerleitung 5 mit einem Rechner 6 verbunden. Dieser Rechner 6 übernimmt die Zugangskontrolle und steuert das Schloss 4. Der Rechner 6 ist über eine Datenleitung 7 mit einer Datenbank 8 sowie über weitere Datenleitungen 9, 10 mit einem Biometriesensor 11 und einem RFID-Leser 12 verbunden.

In dem hier zu betrachtenden Beispiel öffnet der Rechner 6 das Schloss 4 nur dann, wenn ein mit dem Biometriesensor 11 erfasstes biometrisches Merkmal eines Benutzers mit einem Template übereinstimmt. In der gezeigten Ausführungsform ist der Biometriesensor 11 ein Scanner zum Erfassen eines Venenbildes einer Hand des Benutzers. Entsprechend ist das Template eine mathematische Beschreibung eines Bildes der Handvenenstruktur des Benutzers, welches zuvor einmal erfasst und dann als Template hinterlegt wurde.

Die Steuerung ist so programmiert, dass sie eine Vielzahl von Templates für eine Vielzahl von Benutzern verwaltet und beim Erfassen eines biometrischen Merkmals mit dem Biometriesensor 11 das erfasste Bild mit der Vielzahl von Templates vergleicht. Das Schloss öffnet die Steuerung nur dann, wenn ein Vergleich derart ausfällt, dass eine überwiegende Wahrscheinlichkeit dafür besteht, dass der Benutzer, dessen Venenstruktur mithilfe des Biometriesensors 11 erfasst wurde, auch einer der Benutzer ist, deren Templates die Steuerung 6 verwaltet. Zudem muss der erkannte Benutzer zum Öffnen der Tür 2 berechtigt sein.

Dabei wird für diesen Vergleich eine Korrelation des mit dem Biometriesensor 11 erfassten Bildes mit jedem einzelnen der Templates gebildet und nur dann von einem "Match" ausgegangen, wenn die Korrelation einen bestimmten Korrelationsschwellenwert übersteigt.

Aus dem Stand der Technik sind Systeme bekannt, bei denen alle Templates in der Datenbank 8 gespeichert sind. Dies hat jedoch gravierende Nachteile in Bezug auf die Sicherheit und den Datenschutz. Gelingt es einem Angreifer, Zugriff auf die Datenbank 8 zu erhalten, so kann er sich den Templates bemächtigen. Darüber hinaus sind Systeme bekannt, bei denen der Benutzer das Template auf einem maschinenauslesbaren mobilen Datenspeicher mit sich führt, wobei gleichzeitig mit dem Erfassen des biometrischen Merkmals mit dem Biometriesensor 11 das Template aus dem mobilen Datenspeicher mithilfe eines Lesegeräts, beispielsweise eines RFID-Lesers 12, ausgelesen und dann mit dem mit dem Biometriesensor 11 erfassten Bild verglichen wird. Es versteht sich, dass solche Systeme aus dem Stand der Technik ohne eine Datenbank 8 auskommen. Solche Systeme haben jedoch den Nachteil, dass der Benutzer für die Sicherheit seiner biometrischen Daten in Form des Templates selbst sorgen muss.

Mit dem erfindungsgemäßen Verfahrens zum Verwalten eines eine sicherheitsrelevante Information enthaltenden Datensatzes wird nun die Sicherheit des Gesamtsystems erhöht. Dabei wird in dem hier beschriebenen Beispiel die sicherheitsrelevante Information im Sinne der vorliegenden Anmeldung von jeweils einem Template gebildet.

Nach dem ursprünglichen Erfassen des Handvenenmusters zum Generieren des Templates ist dieses in einem Datensatz enthalten. Dieser Datensatz wird so aufgespalten, dass ein erstes Datensatzfragment mit einem ersten Teil der sicherheitsrelevanten Information und ein Datensatzfragment mit einem zweiten Teil der sicherheitsrelevanten Informationen entsteht. Diese beiden Datensatzfragmente werden dann an zwei verschiedenen Orten, welche in dem gezeigten Beispiel der Verwaltung unterschiedlicher Organisationen bzw. Entitäten unterliegen, gespeichert. Das erste Datensatzfragment wird in einer RFID-Karte 13 als mobiler Datenspeichereinrichtung, welche der Benutzer mit sich führt, abgespeichert. Das zweite Datensatzfragment hingegen wird zentral in der Datenbank 8 gespeichert.

Entscheidend für die Sicherheit dieser Aufteilung der sicherheitssensiblen Information auf den RFID-Chip 13 einerseits und die Datenbank 8 andererseits ist nun, dass das erste Datensatzfragment und das zweite Datensatzfragment derart ausgestaltet sind, dass sie ausschließlich gemeinsam die vollständige sicherheitsrelevante Information, d.h. das Template des biometrischen Merkmals, repräsentieren.

Dies bedeutet, dass ein Angreifer, dem nur eines der beiden Datensatzfragmente in die Hände fällt, das ursprüngliche in dem Datensatz aufgespalten enthaltene Template als sicherheitsrelevante Information nicht wiederherstellen kann. Dabei ist es von elementarer Bedeutung, dass zumindest das erste Datensatzfragment mit dem ersten Teil der sicherheitsrelevanten Information oder das zweite Datensatzfragment mit dem zweiten Teil der sicherheitsrelevanten Information derart ausgestaltet ist, dass es keinen Rückschluss auf den anderen Teil der sicherheitsrelevanten Information ermöglicht. In der hier beispielhaft beschriebenen Ausgestaltung ist ein Rückschluss auf das jeweils andere Datensatzfragment weder von dem ersten Datensatzfragment noch von dem zweiten Datensatzfragment ausgehend möglich.

Zum Authentifizieren des Benutzers, welches ggf. das Schloss 4 entriegelt, muss der Benutzer, wenn er sein Handvenenbild mit dem Biometriesensor 11 erfassen lässt, zusätzlich das erste Datensatzfragment aus der RFID-Karte 13 mittels des RFID-Lesers 12 auslesen lassen. Die Steuerung 6 sucht dann in der Datenbank nach einem zu dem ausgelesenen ersten Datensatzfragment passenden zweiten Datensatzfragment und fügt die beiden Datensatzfragmente wieder zu dem ursprünglichen Datensatz zusammen, sodass das vollständige Template erhalten wird. Dann wird das Template mit dem von dem Biometriesensor 11 erfassten Bild verglichen und bei einem "Match" das Schloss 4 geöffnet.

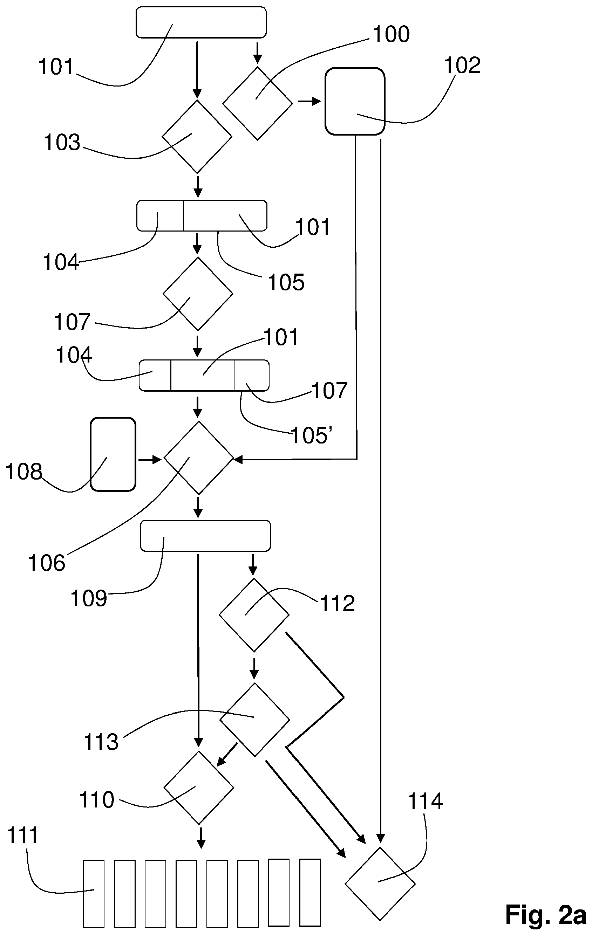

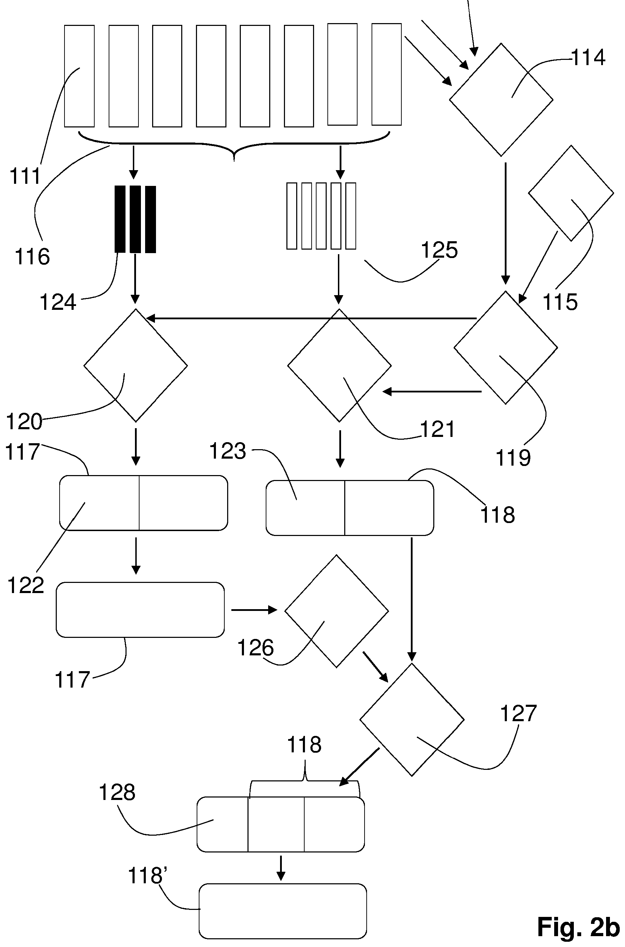

Nachfolgend wird anhand des Flussdiagramms aus den Figuren 2a und 2b beschrieben, wie ein beispielhafter Algorithmus strukturiert ist, mit dem sich ein Datensatz in zwei Datensatzfragmente zerlegen lässt.

Der genutzte Algorithmus erfüllt in dem beschriebenen Beispiel eine Reihe von Anforderungen:
1.) Die Größe zumindest des ersten Datensatzfragments soll einstellbar sein. Dadurch ergibt sich die Möglichkeit, die Menge an Daten des ersten Datensatzfragments, an den auf der RFID-Karte 13 zur Verfügung stehenden Speicher anzupassen.
2.) Sollte ein Angreifer in den Besitz eines Datensatzfragmentes kommen, soll anhand der Daten diese Datensatzfragments kein Rückschluss auf das andere Datensatzfragment, welches an anderem Ort abgelegt ist, möglich sein. Selbst wenn die fehlende Datenmenge sehr klein ist.
3.) Der Algorithmus zum Zusammenfügen soll anhand der ersten und zweiten Datensatzfragmente erkennen, ob die einzelnen Datensatzfragmente tatsächlich zusammengehören oder ob es sich um Datensatzfragmente voneinander verschiedener Datensätze handelt. So kann beim Wiederzusammenfügen vor der Dekodierung der eigentlichen Daten geprüft werden, ob die beiden Datensatzfragmente zusammengehören.
4.) Sowohl der Algorithmus zum Zerlegen des Datensatzes als auch der Algorithmus zum Zusammenfügen soll auf nicht-proprietären, etablierten Techniken beruhen.
5.) An den Algorithmus zum Zerlegen des Datensatzes werden keine besonderen Anforderungen bezüglich der Verarbeitungsgeschwindigkeit gestellt. Der Prozess zum Zerlegen darf etwas zeitaufwendiger sein. Er findet, zumindest im beschriebenen Anwendungsfall, ohnehin nur einmalig statt und in der Regel auf sehr leistungsfähigen Plattformen.
6.) Der Algorithmus zum Zusammenfügen der Datensatzfragmente soll sehr performant stattfinden. In der Regel wird er im beschriebenen Anwendungsfall sehr oft wiederholt und unter Umständen auch auf weniger leistungsfähigen Plattformen, wie z.B. Embedded Devices, ausgeführt.

Im ersten Schritt 100 wird mittels des SHA256-Algorithmus vom zu zerlegenden Datensatz 101 mit der sicherheitsrelevanten Information, nämlich dem Template, ein Hash-Wert 102 mit einer Länge von 256 Bits bzw. 32 Bytes gebildet, welcher im Folgenden zur Verschlüsselung des Datensatzes 101 genutzt wird. Dies sorgt dafür, dass man aus einem Datensatz beliebiger Länge immer einen Schlüssel mit einer festen Länge von 32 Bytes erhält, wie er zur Anwendung des folgenden Verschlüsselungsverfahrens notwendig ist.

Vor der nun folgenden Verschlüsselung wird in Schritt 103 die originale Länge des Datensatzes 101 bestimmt. Diese originale Länge 104 wird dem Ursprünglichen Datensatz 101 in Form von 32 Bits bzw. 4 Bytes vorangestellt. Auf diese Weise wird ein Verarbeitungsdatensatz 105 gebildet. Die Byteorder ist dabei unerheblich. Das Voranstellen der originalen Länge des Datensatzes 101 in dem Verarbeitungsdatensatz 105 ist wichtig, um später nach dem Entschlüsseln die ursprüngliche Länge 104 des Datensatzes rekonstruieren zu können.

Vor dem eigentlichen Verschlüsseln in Schritt 106 muss der nun um 4 Bytes längere Verarbeitungsdatensatz 105 nämlich in Schritt 107 um so viele zusätzliche und zufällig gewählte Bytes 107 ergänzt werden, dass die Gesamtbytelänge des so ergänzten Verarbeitungsdatensatzes 105' ein Vielfaches von 16 ergibt. Dies fordert die folgende Verschlüsselung 106 durch den AES256-CBC-Algorithmus, welcher nur mit vollständigen 16 Byte langen Blöcken arbeitet.

Nun wird die eigentliche Verschlüsselung 106 durchgeführt. Dazu wird mit dem vorher generierten Hash-Wert 102 als Schlüssel und einem Initialvektor 108 von 16 Bytes, der als Parameter von außen vorgegeben wird, der gesamte Verarbeitungsdatensatz 105' verschlüsselt. Der Initialvektor 108 wird dabei als Systemschlüssel genutzt, so dass unterschiedliche Systeme 1 die Datensatzfragmente anderer Systeme 1 nicht rekonstruieren können, sofern sie nicht denselben Initialvektor 108 kennen und nutzen. Dies wird in dem gezeigten Beispiel als kundenspezifischer Schlüssel genutzt.

Weiter sorgt die Verschlüsselung 106 im sog. CBC- bzw. Chained Block Cipher-Mode dafür, dass zum einen Blöcke mit demselben Dateninhalt aber unterschiedlichen Positionen im Datensatz 101 im verschlüsselten Datensatz 109 nicht das gleiche Ergebnis liefern. Es lassen sich so keine Rückschlüsse auf die Originaldaten 101 machen. Andererseits sorgt der CBC-Mode dafür, dass sich durch einen Defekt in dem verschlüsselten Datensatz 109 dieser ab der Fehlerstelle nicht mehr entschlüsseln lässt. Der gesamte verschlüsselte Datensatz 109 ab der Fehlerstelle ist damit unbrauchbar.

Nun wird versucht, den verschlüsselten Datensatz 109 in Schritt 110 in eine maximale Anzahl von Datenscheiben 111 aufzuteilen. Es soll hier eine Maximalzahl von 64 gewählt werden, dies erlaubt es später jeden Datensatz durch ein Bit in einer 64-bittigen Zahl zu repräsentieren. Dazu wird zunächst die Länge des verschlüsselten Datensatzes durch 64 geteilt und das Ergebnis zur nächsthöheren ganzen Zahl aufgerundet. Das ergibt dann die Größe einer Datenscheibe innerhalb des verschlüsselten Datensatzes.

Nun wird noch überprüft, ob die ermittelte Länge der Datenscheibe ein Vielfaches der Verschlüsselungsblocklänge, hier 16 Bytes für AES256, ist. Dazu wird in Schritt 112 die Größe jeder Datenscheibe bestimmt und festgestellt, ob die Länge der Datenscheibe ein ganzzahliges Vielfaches der Verschlüsselungsblocklänge ist oder nicht. Sollte dies der Fall sein, wird die maximale Anzahl der Datenscheiben um eins reduziert und der obige Vorgang wiederholt. So lange, bis die Bedingung des "Misalignments" erfüllt ist. Abschließend wird noch die Länge des verschlüsselten Datensatzes durch die ermittelte Anzahl von Datenscheiben geteilt und das Ergebnis zur nächsthöheren ganzen Zahl aufgerundet. Damit sind ist die Anzahl der Datenscheiben und deren Größe ermittelt.

Das "Misaligment" sorgt dafür, dass in einer Datenscheibe immer ein unvollständiger AES256-Datenblock enthalten ist, was die Rekonstruktion des Gesamtdatensatzes ohne Kenntnis aller Datenscheiben zusätzlich erschwert bzw. unmöglich gemacht wird. Die später, beim Wiederherstellen des Datensatzes durchzuführende AES256-Entschlüsselung wird immer auf einen unvollständigen Datenblock innerhalb der Datenscheibe stoßen. Dank der genutzten Verkettung bei der Verschlüsslung durch den CBC-Mode der AES256-Verschlüsselung sind aber alle Daten ab einer fehlenden Datenscheibe nicht mehr zu entschlüsseln, da die dringend notwendigen Vorgängerdaten fehlen. Dies wäre nicht der Fall, wenn immer vollständige Datenblöcke bei einem Angriff verfügbar wären.

Die Datenscheiben 111 und Schritt 114 sind sowohl in Figur 2a als auch in Figur 2b zeichnerisch dargestellt, um die Betrachtung der zusammenhängenden Figuren zu erleichtern. Die Aufteilung des Flussdiagramms auf zwei Figuren erfolgt lediglich aus Platzgründen.

Im nächsten Schritt 113 wird ermittelt, wie viele Datenscheiben maximal für eine vorgegebene Maximalgröße eines Datensatzfragments erlaubt sind. Dazu wird die von außen vorgegebene Maximalgröße in Bytes durch die Größe der Datenscheiben geteilt und das Ergebnis zur nächstkleineren ganzen Zahl abgerundet. Dies entspricht der maximalen Anzahl an Datenscheiben in dem Datensatzfragment, dessen Größe festgelegt wird. Außerdem wird ermittelt, wie viele Datenscheiben mindestens benötigt werden, um ein Datensatzfragment mit einer vorgegebenen Mindestgröße zu erzeugen. Dazu wird die Mindestgröße in Bytes durch die Größe der Datenscheibe geteilt und das Ergebnis bis zur nächsthöheren ganzen Zahl aufgerundet. Dies entspricht der minimalen Anzahl an Datenscheiben in dem Datensatzfragment, dessen Größe festgelegt wird.

Nun wird mittels eines Zufallszahlengenerators eine zufällige 64-bittige Zahl erzeugt. Die nicht genutzten Bits werden ausmaskiert. Die Anzahl der nicht genutzten Bits ergibt sich aus der vorher ermittelten Anzahl von Datenscheiben für den gesamten verschlüsselten Datenblock. Die Anzahl der gesetzten Bits in dieser Zahl wird ermittelt. Ist die Anzahl der gesetzten Bits kleiner als die Anzahl der minimal erforderlichen Datenscheiben, so beginnt der Vorgang erneut mit dem Erzeugen einer Zufallszahl. Ist die Anzahl der gesetzten Bits größer als die Anzahl der maximal erlaubten Datenscheiben, beginnt der Vorgang erneut mit dem Erzeugen einer Zufallszahl. Dieser Vorgang wird so lange wiederholt, bis die erzeugte Zufallszahl die beiden oberen Kriterien erfüllt. Es handelt sich beim Ergebnis um ein Verteilungsschema in Form einer Maske 116, welche Datenscheiben in das erste Datensatzfragment 117 und welche in das zweite Datensatzfragment 118 wandern sollen. Durch die zufällige Generierung der Zahl, können bei jedem Spaltvorgang unterschiedlich viele Datenscheiben in das erste oder das zweite Datensatzfragment 117, 118 wandern. Lediglich die Minimal- und Maximalzahl ist bekannt.

Nun werden die beiden Datensatzfragmente 117, 118 vorbereitet. Dazu wird zunächst in Schritt 114 ein Headerdatensatz vorbereitet, bestehend aus einem Byte, welches die Anzahl der genutzten Datenscheiben enthält. Darauf folgen die 64 Bits bzw. 8 Bytes der zufällig ermittelten Datenscheiben-Maske. Darauf folgen die 16 Bytes des zum Verschlüsseln genutzten Hash-Wertes der Originaldaten. Dies ergibt eine Gesamtlänge des Headerdatensatzes von 21 Bytes. Der Headerdatensatz 114 enthält alle zum Entschlüsseln und Rekonstruieren notwendigen Daten (außer den Daten selbst und dem AES256-Initialvektor). Jetzt wird in Schritt 115 ein weiterer 21 Byte langer Datenblock aus zufälligen, möglichst gut verteilten Daten erzeugt. Dieser Datenblock bildet den zweiten Header 123 des zweiten Datensatzfragments 118. Im Folgenden wird in Schritt 119 als Exklusiv-Oder-Kombination des Datenblockes aus den 21 zufälligen Bytes und den 21 Bytes des Headerdatensatzes 114 der erste Header 122 für das erste Datensatzfragment 117 gebildet. Man kann nun z.B. noch, der besseren Verteilung wegen, jedes zweite Byte des einen ersten Headers 122 mit dem jeweiligen Byte aus dem zweiten Header 123 tauschen. Die so gebildeten Header 122, 123 werden in den Schritten 120 und 121 den Datenscheiben 124, 125 des ersten bzw. zweiten Datensatzfragments 117, 118 vorangestellt.

Bildet man später beim Zusammenführen wieder die Exklusiv-Oder-Kombination aus beiden ersten und zweiten Headern, so erhält man wieder den Headerdatensatz und damit die Möglichkeit die folgenden Daten zu entschlüsseln. Einzeln, ohne die Kombination beider Header ergibt sich diese Möglichkeit nicht.

Abschließend wird in Schritt 126 der SHA224-Hash des ersten Datensatzfragments 117 gebildet. Dieser Hash-Wert 128 wird in Schritt 127 dem zweiten Datensatzfragment 118 in Form von zusätzliche 28 Bytes vorweggestellt. Und so das zu speichernde zweite Datensatzfragment 118' fertig gestellt. Dadurch lassen sich später die beiden Datensatzfragmente auf Zugehörigkeit überprüfen bevor die eigentliche, zeitaufwändigere Entschlüsselung beginnt.

Zum Abschluss werden die Datenscheiben 111 der Reihe nach und entsprechend der Datenscheibenmaske aus verschlüsselten Verarbeitungsdatensatz herausgeschnitten und nach und nach an die Header 122, 123 des ersten bzw. zweiten Datensatzfragments 117, 118 angehängt.

Es ergeben sich so zwei Datensatzfragmente 117, 118' mit jeweils einem 21 Byte langen Header und einer darauffolgenden Anzahl von Datenscheiben mit einer jeweiligen Länge, die kein Vielfaches von 16 ist. Dabei enthält das eine Datensatzfragment 117, 118' die Datenscheiben, welche dem anderen Datensatzfragment fehlen und umgekehrt. Welche dies sind, zeigt die im ersten Header 122 des ersten Datensatzfragments 117 abgespeicherte Maske. Diese ergibt sich beim Zusammenfügen der beiden Header 122, 123 der Datensatzfragmente 117, 118' wie oben beschrieben. Die Gesamtzahl der Datenscheiben bzw. die Anzahl der genutzten Bits innerhalb der Maske ergibt sich ebenfalls aus dem wieder zusammengeführten Headerdatensatz. Die letzte Datenscheibe insgesamt kann dabei auch eine geringere Länge als die der übrigen Datenscheiben haben. Schließlich wird auch der 16 Byte lange AES256-Schlüssel beim Zusammenfügen rekonstruiert.

Das erste Datensatzfragment 117 wird auf der RFID-Karte 13 des Benutzers gespeichert. Die Karte 13 führt Benutzer mit sich. Das zweite Datensatzfragment 118' wird in der Datenbank 8 innerhalb der IT-Infrastruktur der Organisation, zu welcher der gesicherte Raum 3 gehört, gespeichert.

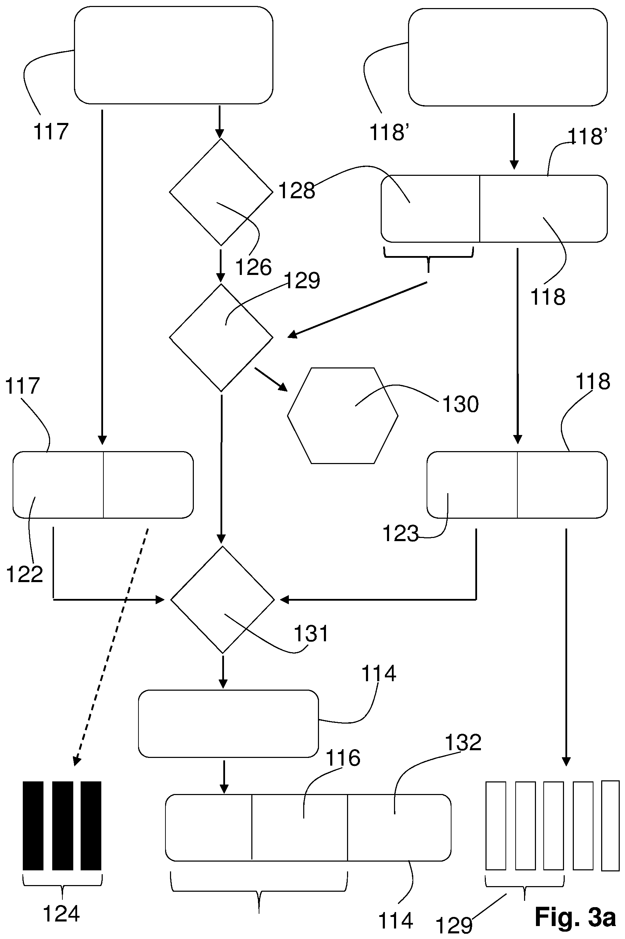

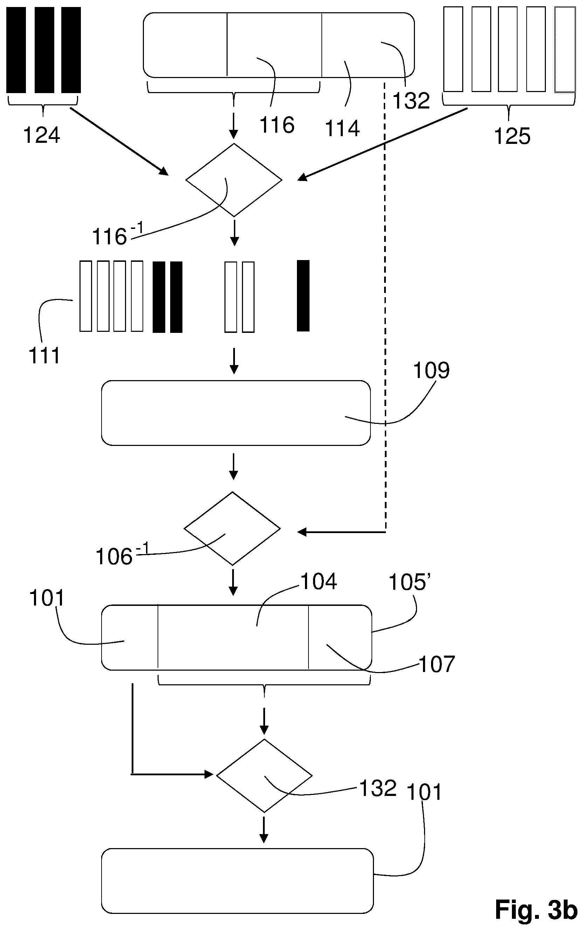

Die Figuren 3a und 3b zeigen den Ablauf des erfindungsgemäßen Verfahrens, wenn der Benutzer den Raum 3 betreten möchte und dazu die Steuerung 6 veranlasst werden soll, das Schloss 4 zu entriegeln. Um die Tür zu öffnen muss sich der Benutzer an dem System 1 authentifizieren. Dazu wird wie oben ausgeführt das mit dem Biometriesensor 11 erfasste Bild seiner Handvenenstruktur mit dem in den ersten und zweiten Datensatzfragmenten 117, 118' hinterlegten Template verglichen. Während wie zuvor ausgeführt das zweite Datensatzfragment 118' in der Datenbank 8 gespeichert ist, führt der Benutzer das erste Datensatzfragment 117 in der RFID-Karte 13 mit sich. Die RFID-Karte 13 wird mit Hilfe des RFID-Lesers 12 ausgelesen.

Die Figuren 3a und 3b zeigen nun, wie aus den beiden Datensatzfragmenten 117, 118' wieder der ursprüngliche Datensatz 101 mit der vollständigen sicherheitsrelevanten Information, d.h. dem Template des biometrischen Merkmals, wiederhergestellt wird.

In den Figuren 3a und 3b sind Schritte, welche die inversen Schritte zu den anhand der Figuren 2a und 2b diskutierten Verfahrensschritten darstellen, mit "⁻¹" gekennzeichnet.

In Schritt 126 wird der Hash-Wert des ersten Datensatzfragments 117 gebildet und mit dem aus dem zweiten Datensatzfragment 118' extrahierten Hash-Wert 128 in Schritt 129 verglichen. Stimmen die beiden Hash-Werte überein, so wird das Verfahren fortgesetzt, die beiden Datensatzfragmente 117, 118' passen offenbar zusammen. Anderenfalls wird das Verfahren in Schritt 130 abgebrochen.

Zum Wiederherstellen des ursprünglichen Headerdatensatzes 114 werden der erste Header 122 des ersten Datensatzfragments 117 und der zweite Header 123 des zweiten Datensatzfragments 118 in Schritt 131 durch eine Exklusiv-Oder-Funktion miteinander verknüpft. Mit dem Headerdatensatz 114 stehen dann wieder die Anzahl der Datenscheiben 124, 125, die Maske 116 sowie der vollständige Schlüssel 102, welcher zur Verschlüsselung der Daten verwendet wurde zur Verfügung.

Die Datenscheiben 124, 125 sowie der Headerdatensatz 114 sind sowohl in Figur 3a als auch in Figur 3b zeichnerisch dargestellt, um die Betrachtung der zusammenhängenden Figuren zu erleichtern. Die Aufteilung des Flussdiagramms auf zwei Figuren erfolgt lediglich aus Platzgründen.

Im nächsten Schritt 116⁻¹ werden die Datenscheiben 124 des ersten Datensatzfragments 117 und die Datenscheiben 125 des zweiten Datensatzfragments 118' anhand der wiederhergestellten Maske 116 in Schritt 116⁻¹ wieder mit einander kombiniert und in der richtigen Reihenfolge, die gleich der Reihenfolge der Datenscheiben 111 in dem ursprünglichen Datensatz 101 ist, angeordnet. Es liegen nun die Daten in der richtigen Reihenfolge, aber nach wie vor verschlüsselt vor. Daher wird nun in Schritt 106⁻¹ mittels des ursprünglichen Schlüssels 102 der Datensatz entschlüsselt. Es entsteht der ursprüngliche Verarbeitungsdatensatz 105'. Von diesem werden in Schritt 132 die überschüssigen Informationen wie das Padding und die Länge, entfernt, sodass der ursprüngliche Datensatz 101 mit der sicherheitsrelevanten Information wiederhergestellt ist. Dieser Datensatz 101 kann dann mit dem mit Hilfe des Biometriesensors 11 erfassten Bild verglichen bzw. korreliert werden.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichen

- 1: System
- 2: Tür
- 3: Raum
- 4: Schloss
- 5: Steuerleitung
- 6: Rechner // Steuerung
- 7, 9, 10: Datenleitung
- 8: Datenbank
- 11: Biometriesensor
- 12: RFID-Leser
- 13: RFID-Karte

- 101: Datensatz
- 102, 128: Hash-Wert
- 104: ursprüngliche Länge
- 105: Verarbeitungsdatensatz
- 105': ergänzter Vearbeitungsdatensatz
- 108: Initialvektor
- 109: verschlüsselter Datensatz
- 111, 124, 125: Datenscheiben
- 114: Headerdatensatz
- 116: Maske
- 117: erstes Datensatzfragment
- 118, 118': zweites Datensatzfragment
- 122: erster Header
- 123: zweiter Header

## Patentansprüche

1. Computerimplementiertes Verfahren zum Verwalten eines eine sicherheitsrelevante Information enthaltenden Datensatzes (101) mit den Schritten
Aufspalten des Datensatzes (101) in ein erstes Datensatzfragment (117) mit einem ersten Teil der sicherheitsrelevanten Information und in ein zweites Datensatzfragment (118, 118') mit einem zweiten Teil der sicherheitsrelevanten Information,
Speichern des ersten Datensatzfragments (117) in einem ersten nichtflüchtigen Speicher,
Speichern des zweiten Datensatzfragments (118, 118') in einem zweiten nichtflüchtigen Speicher,
wobei das erste Datensatzfragment (117) und das zweite Datensatzfragment (118, 118') ausschließlich gemeinsam die vollständige sicherheitsrelevante Information repräsentieren,
wobei zumindest das erste Datensatzfragment (117) mit dem ersten Teil der sicherheitsrelevanten Information oder das zweite Datensatzfragment (118, 118') mit dem zweiten Teil der sicherheitsrelevanten Information derart ausgestaltet ist, dass es keinen Rückschluss auf den anderen Teil der sicherheitsrelevanten Information ermöglicht,
wobei das Aufspalten des Datensatzes (101) die Schritte umfasst
Bilden eines Verarbeitungsdatensatzes (105, 105') aus dem Datensatz (101), so dass der Verarbeitungsdatensatz (105, 105') weitere Daten umfasst,
Erzeugen eines kryptographischen Schlüssels und
Verschlüsseln des Verarbeitungsdatensatzes (105, 105') unter Verwendung des kryptographischen Schlüssels, so dass ein verschlüsselter Datensatz (109) erzeugt wird,
wobei das Aufspalten des Datensatzes (101) weiterhin die Schritte umfasst
Zerlegen des verschlüsselten Datensatzes (109) in eine Mehrzahl von Datenscheiben (111, 124, 125),
wobei das Zerlegen des verschlüsselten Datensatzes (109) derart erfolgt, dass eine vorgegebene Anzahl von Datenscheiben (111, 124, 125) mit identischer Länge erzeugt wird, so dass die Länge jeder Datenscheibe (111, 124, 125) mit identischer Länge von einer Gesamtlänge des verschlüsselten Datensatzes (109) abhängt, und
wobei das Zerlegen des verschlüsselten Datensatzes (109) die Schritte umfasst
Überprüfen, ob die Länge jeder Datenscheibe (111, 124, 125) mit identischer Länge ein ganzzahliges Vielfaches einer Verschlüsselungsblocklänge des zum Verschlüsseln des Verarbeitungsdatensatzes (105, 105') verwendeten kryptographischen Verfahrens ist, und
wenn dies der Fall ist, Reduzieren der vorgegebenen Anzahl von Datenscheiben (111, 124, 125) um eins und Wiederholen des Zerlegens des Verarbeitungsdatensatzes (105, 105'), solange bis die Länge der Mehrzahl von Datenscheiben (111, 124, 125) mit identischer Länge kein Vielfaches der Verschlüsselungsblocklänge des zum Verschlüsseln des Verarbeitungsdatensatzes (105, 105') verwendeten kryptographischen Verfahrens mehr ist,
Verteilen der Mehrzahl von Datenscheiben (111, 124, 125) anhand eines Verteilungsschemas auf die ersten und zweiten Datensatzfragmente (117, 118, 118'),
Erzeugen eines Headerdatensatzes (114), der den kryptographischen Schlüssel und das Verteilungsschema umfasst,
Hinzufügen eines ersten Headers (122) auf Grundlage des Headerdatensatzes (114) zu dem ersten Datensatzfragment (117) und
Hinzufügen eines zweiten Headers (123) zu dem zweiten Datensatzfragment (118, 118').

2. Computerimplementiertes Verfahren nach dem vorhergehenden Anspruch, wobei zumindest dem ersten Header (122) des ersten Datensatzfragments (117) oder dem zweiten Header (123) des zweiten Datensatzfragments (118, 118') eine Kennung des anderen Datensatzfragments hinzugefügt wird.

3. Computerimplementiertes Verfahren nach einem der vorhergehenden Ansprüche, wobei der kryptographische Schlüssel einen von der sicherheitsrelevanten Information unabhängigen Initialvektor umfasst.

4. Computerimplementiertes Verfahren nach einem der vorhergehenden Ansprüche, wobei bei dem Verschlüsseln des Verarbeitungsdatensatzes (105, 105') ein Verschlüsselungsalgorithmus verwendet wird, der jeden Block der sicherheitsrelevanten Information in Abhängigkeit von einem Inhalt des vorhergehenden Blocks der sicherheitsrelevanten Information in dem Datensatz verschlüsselt.

5. Computerimplementiertes Verfahren nach einem der vorhergehenden Ansprüche, wobei eine Datenmenge des ersten Datensatzfragments (117) auswählbar einstellbar ist.

6. Computerimplementiertes Verfahren nach einem der vorhergehenden Ansprüche, wobei das Verfahren die Schritte umfasst
Erzeugen eines Dummyheaderdatensatzes, der den zweiten Header (123) bildet, und
Bilden einer Exklusiv-Oder-Kombination des Headerdatensatzes (114) und des Dummyheaderdatensatzes, wobei die Exklusiv-Oder-Kombination den zweiten Header (123) bildet.

7. Computerimplementiertes Verfahren nach einem der vorhergehenden Ansprüche, wobei der erste nichtflüchtige Speicher Teil einer mobilen Speichereinrichtung ist, wobei die mobile Speichereinrichtung vorzugsweise eine drahtlos auslesbare Schnittstelle umfasst.

8. Computerimplementiertes Verfahren nach einem der vorhergehenden Ansprüche, wobei die sicherheitsrelevante Information ausgewählt ist aus einer Gruppe bestehend aus einer Urkunde, einem Kunstwerk, einem Token und einem einen Zugangsschlüssel, vorzugsweise ein biometrisches Merkmal eines Benutzers, repräsentierendes Template.

9. Computerimplementiertes Verfahren nach einem der vorhergehenden Ansprüche, wobei das Verfahren weiterhin die Schritte umfasst
Auslesen des ersten Datensatzfragments (117) aus dem ersten nichtflüchtigen Speicher und
Auslesen des zweiten Datensatzfragments (118, 118') aus dem zweiten nichtflüchtigen Speicher,
Widerherstellen der sicherheitsrelevanten Information durch Kombinieren des ersten Teils der sicherheitsrelevanten Information und des zweiten Teil der sicherheitsrelevanten Information und
Ausgeben der sicherheitsrelevanten Information.

10. Computerimplementiertes Verfahren nach einem der vorhergehenden Ansprüche, wobei das erste und das zweite Datensatzfragment (117, 118, 118') derart ausgestaltet sind, dass sich vor dem Widerherstellen der sicherheitsrelevanten Information anhand der ersten und zweiten Datensatzfragmente (117, 118, 118') feststellen lässt, dass die beiden Datensatzfragmente (117, 118, 118') zu dem gleichen Datensatz (101) gehören.

11. Computerimplementiertes Verfahren nach dem vorhergehenden Anspruch, wobei das Verfahren den Schritt umfasst
vor dem Wiederherstellen der sicherheitsrelevanten Information Prüfen, ob das erste und das zweite Datensatzfragment (117, 118, 118') zum gleichen Datensatz (101) gehören, und nur dann, wenn das erste und das zweite Datensatzfragment (117, 118, 118') zum gleichen Datensatz (101) gehören, Ausführen des Wiederherstellens der sicherheitsrelevanten Information.

12. Computerimplementiertes Verfahren zum Überprüfen einer Zugangsberechtigung eines Benutzers zu einer Ressource, das ein Verfahren zum Verwalten einer sicherheitsrelevanten Information nach einem der vorhergehenden Ansprüche umfasst,
wobei die sicherheitsrelevante Information ein Template zur Authentifizierung des Benutzers ist,
wobei der erste nichtflüchtige Speicher Teil einer mobilen Speichereinrichtung (13) ist, und
wobei das Verfahren weiterhin die Schritte aufweist
Einlesen eines Zugangsschlüssels,
Bestimmen einer Korrelation zwischen dem Zugangsschlüssel und dem Template und
Gewähren eines Zugangs zu der Ressource, wenn die Korrelation einen bestimmten Korrelationsschwellenwert übersteigt.

## Claims

1. A computer-implemented method for managing a data set (101) containing security-relevant information, comprising the steps
splitting the data set (101) into a first data set fragment (117) containing a first part of the security-relevant information and into a second data set fragment (118, 118') containing a second part of the security-relevant information, storing the first data set fragment (117) in a first non-volatile memory,
storing the second data set fragment (118, 118') in a second non-volatile memory,
wherein the first data set fragment (117) and the second data set fragment (118, 118') solely together represent the complete security-relevant information,
wherein at least the first data set fragment (117) with the first part of the security-relevant information or the second data set fragment (118, 118') with the second part of the security-relevant information is arranged in such a way that no conclusion can be drawn about the other part of the security-relevant information,
wherein splitting the data set (101) comprises the steps
forming a processing data set (105, 105') from the data set (101) so that the processing data set (105, 105') comprises further data,
generating a cryptographic key, and
encrypting the processing data set (105, 105') using the cryptographic key so that an encrypted data set (109) is generated,
wherein the splitting of the data set (101) further comprises the steps of
decomposing the encrypted data set (109) into a plurality of data slices (111, 124, 125),
wherein the decomposition of the encrypted data set (109) is performed such that a predetermined number of data slices (111, 124, 125) with identical lengths is generated, such that the length of each data slice (111, 124, 125) with identical lengths depends on a total length of the encrypted data set (109), and wherein the decomposing of the encrypted data set (109) comprises the steps
checking whether the length of each data slice (111, 124, 125) with identical length is an integer multiple of an encryption block length of the cryptographic method used to encrypt the processing data set (105, 105'), and
if this is the case, reducing the predetermined number of data slices (111, 124, 125) by one and repeating the decomposing of the processing data set (105, 105') until the length of the plurality of data slices (111, 124, 125) is no longer a multiple of the encryption block length of the cryptographic method used to encrypt the processing data set (105, 105'),
distributing the plurality of data slices (111, 124, 125) to the first and second data set fragments (117, 118, 118') according to a distribution scheme,
generating a header data set (114) comprising the cryptographic key and the distribution scheme,
adding a first header (122) to the first data set fragment (117) on the basis of the header data set (114), and
adding a second header (123) to the second data set fragment (118, 118').

2. The computer-implemented method according to the previous claim, wherein at least the first header (122) of the first data set fragment (117) or the second header (123) of the second data set fragment (118, 118') is provided with an identifier of the other data set fragment.

3. The computer-implemented method according to any one of the previous claims, wherein the cryptographic key comprises an initial vector independent of the security-relevant information.

4. The computer-implemented method according to any one of the previous claims, wherein, when encrypting the processing data set (105, 105'), an encryption algorithm is used which encrypts each block of the security-relevant information depending on a content of the previous block of the security-relevant information in the data set.

5. The computer-implemented method according to any one of the previous claims, wherein a data quantity of the first data set fragment (117) can be selectively set.

6. The computer-implemented method according to any one of the previous claims, wherein the method comprises the steps of
generating a dummy header data set that forms the second header (123), and
forming an exclusive OR combination of the header data set (114) and the dummy header data set, wherein the exclusive OR combination forms the second header (123).

7. The computer-implemented method according to any one of the previous claims, wherein the first non-volatile memory is part of a mobile storage device, wherein the mobile storage device preferably comprises a wirelessly readable interface.

8. The computer-implemented method according to any one of the previous claims, wherein the security-relevant information is selected from a group consisting of a document, a piece of artwork, a token and a template representing an access key, preferably a biometric feature of a user.

9. The computer-implemented method according to any one of the previous claims, wherein the method further comprises the steps of
reading the first data set fragment (117) from the first non-volatile memory and reading the second data set fragment (118, 118') from the second non-volatile memory,
reconstructing the security-relevant information by combining the first part of the security-relevant information and the second part of the security-relevant information, and
outputting the security-relevant information.

10. The computer-implemented method according to any one of the previous claims, wherein the first and second data set fragments (117, 118, 118') are arranged such that, before restoring the security-relevant information, it can be determined on the basis of the first and second data set fragments (117, 118, 118') that the two data set fragments (117, 118, 118') belong to the same data set (101).

11. The computer-implemented method according to the previous claim, wherein the method comprises the step of
before restoring the security-relevant information checking whether the first and second data set fragments (117, 118, 118') belong to the same data set (101), and only if the first and second data set fragments (117, 118, 118') belong to the same data set (101), carrying out the restoration of the security-relevant information.

12. A computer-implemented method for verifying a user's access authorization to a resource, comprising a method for managing security-relevant information according to any one of the previous claims,
wherein the security-relevant information is a template for authenticating the user,
wherein the first non-volatile memory is part of a mobile storage device (13), and
wherein the method further comprises the steps of
reading an access key,
determining a correlation between the access key and the template, and
granting access to the resource if the correlation exceeds a predetermined correlation threshold.

## Revendications

1. Procédé mis en œuvre par ordinateur et permettant de gérer un jeu de données (101) contenant des informations pertinentes pour la sécurité, comprenant les étapes consistant à :
diviser le jeu de données (101) en un premier fragment du jeu de données (117) comprenant une première partie des informations pertinentes pour la sécurité et en un second fragment du jeu de données (118, 118') comprenant une seconde partie des informations pertinentes pour la sécurité, stocker le premier fragment du jeu de données (117) dans une première mémoire non volatile,
stocker le second fragment du jeu de données (118, 118') dans une seconde mémoire non volatile,
où le premier fragment du jeu de données (117) et le second fragment du jeu de données (118, 118') représentent ensemble exclusivement les informations complètes pertinentes pour la sécurité,
où au moins le premier fragment du jeu de données (117) comprenant la première partie des informations pertinentes pour la sécurité ou le second fragment du jeu de données (118, 118') comprenant la seconde partie des informations pertinentes pour la sécurité est conçu de façon telle qu'il ne permet pas de tirer des conclusions sur l'autre partie des informations pertinentes pour la sécurité,
où la division du jeu de données (101) comprend les étapes consistant à :
former un jeu de données de traitement (105, 105') à partir du jeu de données (101), de sorte que le jeu de données de traitement (105, 105') comprend des données supplémentaires,
générer une clé cryptographique, et
crypter le jeu de données de traitement (105, 105') en utilisant la clé cryptographique de sorte qu'un jeu de données crypté (109) est généré,
dans lequel la division du jeu de données (101) comprend en outre les étapes consistant à :
décomposer le jeu de données crypté (109) en une pluralité de tranches de données (111, 124, 125),
où la décomposition du jeu de données crypté (109) est effectuée de façon à générer un nombre prédéfini de tranches de données (111, 124, 125) de longueur identique, de sorte que la longueur de chaque tranche de données (111, 124, 125) de longueur identique dépend d'une longueur totale du jeu de données crypté (109), et
où la décomposition du jeu de données crypté (109) comprend les étapes consistant à :
vérifier si la longueur de chaque tranche de données (111, 124, 125) de longueur identique est un multiple entier d'une longueur de bloc de cryptage du procédé cryptographique utilisé pour crypter le jeu de données de traitement (105, 105'), et
si tel est le cas, réduire le nombre prédéfini de tranches de données (111, 124, 125) d'une unité et répéter la décomposition du jeu de données de traitement (105, 105') jusqu'à ce que la longueur de la pluralité de tranches de données (111, 124, 125) de longueur identique ne soit plus un multiple de la longueur de bloc de cryptage du procédé cryptographique utilisé pour crypter le jeu de données de traitement (105, 105'),
répartir la pluralité de tranches de données (111, 124, 125) sur les premier et second fragments du jeu de données (117, 118, 118') à l'aide d'un modèle de distribution,
générer un jeu de données d'en-tête (114) comprenant la clé cryptographique et le modèle de distribution,
ajouter un premier en-tête (122) au premier fragment du jeu de données (117) en se basant sur le jeu de données d'en-tête (114), et
ajouter un second en-tête (123) au second fragment du jeu de données (118, 118').

2. Procédé mis en œuvre par ordinateur selon la revendication précédente, dans lequel un identifiant de l'autre fragment du jeu de données est ajouté au moins au premier en-tête (122) du premier fragment du jeu de données (117) ou au second en-tête (123) du second fragment du jeu de données (118, 118').

3. Procédé mis en œuvre par ordinateur selon l'une des revendications précédentes, dans lequel la clé cryptographique comprend un vecteur initial indépendant des informations pertinentes pour la sécurité.

4. Procédé mis en œuvre par ordinateur selon l'une des revendications précédentes, dans lequel le cryptage du jeu de données de traitement (105, 105') utilise un algorithme de cryptage qui crypte chaque bloc des informations pertinentes pour la sécurité en fonction du contenu du bloc précédent d'informations pertinentes pour la sécurité au sein du jeu de données.

5. Procédé mis en œuvre par ordinateur selon l'une des revendications précédentes, dans lequel une quantité de données du premier fragment du jeu de données (117) peut être ajustée de manière sélectionnable.

6. Procédé mis en œuvre par ordinateur selon l'une des revendications précédentes, dans lequel le procédé comprend les étapes consistant à :
générer un jeu de données d'en-tête factice formant le second en-tête (123), et
former une combinaison OU exclusif du jeu de données d'en-tête (114) et du jeu de données d'en-tête factice, la combinaison OU exclusif formant le second en-tête (123).

7. Procédé mis en œuvre par ordinateur selon l'une des revendications précédentes, dans lequel la première mémoire non volatile fait partie d'un dispositif de stockage mobile, le dispositif de stockage mobile comprenant de préférence une interface lisible sans fil.

8. Procédé mis en œuvre par ordinateur selon l'une des revendications précédentes, dans lequel les informations pertinentes pour la sécurité sont sélectionnées dans un groupe constitué d'un certificat, d'une œuvre d'art, d'un jeton et d'un modèle représentant une clé d'accès, de préférence une caractéristique biométrique d'un utilisateur.

9. Procédé mis en œuvre par ordinateur selon l'une des revendications précédentes, dans lequel le procédé comprend en outre les étapes consistant à :
lire le premier fragment du jeu de données (117) à partir de la première mémoire non volatile, et
lire le second fragment du jeu de données (118, 118') à partir de la seconde mémoire non volatile,
restaurer les informations pertinentes pour la sécurité en combinant la première partie des informations pertinentes pour la sécurité et la seconde partie des informations pertinentes pour la sécurité, et
émettre les informations pertinentes pour la sécurité.

10. Procédé mis en œuvre par ordinateur selon l'une des revendications précédentes, dans lequel les premier et second fragments du jeu de données (117, 118, 118') sont conçus de façon telle que, avant la restauration des informations pertinentes pour la sécurité, il est possible de déterminer, à l'aide des premier et second fragments du jeu de données (117, 118, 118'), que les deux fragments du jeu de données (117, 118, 118') appartiennent au même jeu de données (101).

11. Procédé mis en œuvre par ordinateur selon la revendication précédente, dans lequel le procédé comprend l'étape consistant à :
avant de restaurer les informations pertinentes pour la sécurité, vérifier si les premier et second fragments du jeu de données (117, 118, 118') appartiennent au même jeu de données (101) et mettre en œuvre la restauration des informations pertinentes pour la sécurité uniquement si les premier et second fragments du jeu de données (117, 118, 118') appartiennent au même jeu de données (101).

12. Procédé mis en œuvre par ordinateur et permettant de vérifier une autorisation d'accès d'un utilisateur à une ressource, comprenant un procédé permettant de gérer des informations pertinentes pour la sécurité selon l'une des revendications précédentes,
dans lequel les informations pertinentes pour la sécurité sont un modèle permettant d'authentifier l'utilisateur,
dans lequel la première mémoire non volatile fait partie d'un dispositif de stockage mobile (13), et
dans lequel le procédé comprend en outre les étapes consistant à :
lire une clé d'accès,
déterminer une corrélation entre la clé d'accès et le modèle, et
accorder un accès à la ressource lorsque la corrélation dépasse une certaine valeur de seuil de corrélation.
